(19) Europäisches Patentamt
European Patent Office
Office européen des brevets

(11) Numéro de publication: **0 037 297**
**B1**

(12) **FASCICULE DE BREVET EUROPEEN**

(45) Date de publication du fascicule du brevet: **14.08.85**

(51) Int. Cl.⁴: **G 03 G 9/08**, G 03 G 9/14

(21) Numéro de dépôt: **81400346.3**

(22) Date de dépôt: **06.03.81**

(54) **Poudre pour le développement d'images latentes et son procédé de fabrication.**

(30) Priorité: **20.03.80 FR 8006294**

(43) Date de publication de la demande: **07.10.81 Bulletin 81/40**

(45) Mention de la délivrance du brevet: **14.08.85 Bulletin 85/33**

(84) Etats contractants désignés: **CH DE GB IT LI NL**

(56) Documents cités:
**DE-A-2 324 378**
**DE-A-2 623 472**
**DE-A-2 809 045**
**DE-A-2 815 857**
**FR-A-1 261 521**
**FR-A-2 311 054**
**FR-A-2 331 071**
**FR-A-2 339 645**
**GB-A-1 172 839**
**JP-A-55 038 597**
**US-A-4 051 077**

**J.H. DESSAUER et al.: "XEROGRAPHY AND RELATED PROCESSES" ed. The Focal Press, page 273, chapter 9. paragraph 9.4.2. New York, US**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Gerriet, Gisèle, Lotissement la Traille, F-90000 Vezelois (FR)**
Inventeur: **Deloye, Michel, 18, avenue du Chateau d'eau, F-90000 Belfort (FR)**
Inventeur: **Pon, François, 12, avenue du Maréchal Juin, F-90400 Danjoutin (FR)**

(74) Mandataire: **Davroux, Yves, CII HONEYWELL BULL 94, avenue Gambetta, F-75020 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 037 297 B1

**Description**

La présente invention se rapporte à une poudre destinée au développement d'images latentes, ainsi qu'à son procédé de fabrication. Cette poudre trouve plus particulièrement quoique non exclusivement, son application dans les machines imprimantes magnétiques dans lesquelles l'impression des caractères est réalisée sans pour cela faire appel à l'impact de types d'impression en relief sur une feuille de papier réceptrice.

Les machines imprimantes de ce type comportent un élément d'enregistrement constitué, le plus souvent, par un tambour rotatif ou une courroie sans fin à la surface duquel on peut former, par voie magnétique, des zones sensibilisées appelées également images latentes magnétiques, qui correspondent aux caractères à imprimer. Ces images latentes sont ensuite développées, c'est-à-dire rendues visibles, à l'aide d'un révélateur en poudre qui, déposé sur l'élément d'enregistrement, n'est attiré que par les zones sensibilisées de celui-ci. L'application de ce révélateur en poudre est réalisée par un dispositif applicateur, de type connu, devant lequel passe l'élément d'enregistrement. Après quoi, les particules de révélateur qui ont été ainsi déposées sur les images latentes sont transférées à une feuille de support, tel qu'une feuille de papier par exemple, sur laquelle elles sont fixées de manière permanente.

Les révélateurs en poudre qui sont utilisés dans les machines imprimantes magnétiques doivent satisfaire à de nombreuses conditions. Ces révélateurs doivent en effet être capables non seulement d'adhérer sur les zones magnétisées de l'élément d'enregistrement, mais également d'être transférés facilement et en totalité sur la feuille de papier réceptrice avec laquelle ils sont ensuite mis en contact. Ces révélateurs doivent aussi pouvoir fondre franchement à une température relativement basse, afin que la température de leur dispositif de fixation sur le papier puisse être ajustée à une valeur telle que les risques d'inflammation ou de carbonisation du papier soient supprimés. Cependant, ces révélateurs ne doivent pas avoir un point de fusion trop bas, sous peine de subir un ramollissement qui, en les rendant collants, les faits adhérer davantage à l'élément d'enregistrement et les empêche ainsi d'être transférés en totalité sur le papier. En outre, il est nécessaire que ces révélateurs n'engendrent pas une odeur désagréable ou des vapeurs dangereuses au moment où ils subissent une fusion. De plus, ils doivent être capables de se mélanger à un colorant que l'on est souvent obligé de rajouter pour augmenter le contraste entre la teinte de fond du papier et celle des images sur ce papier. Par ailleurs, il est indispensable que ces révélateurs en poudre soient constitués de particules solides relativement fines, afin de produire sur le papier des images de bonne qualité. En outre, ces révélateurs, lorsqu'ils sont fondus, ne doivent ni s'étaler sur le papier, ni diffuser largement à l'intérieur de celui-ci, faute de quoi les images formées sur ce papier apparaîtraient floues. De plus, il est hautement désirable que les particules de révélateur ne s'agglutinent pas et ne se chargent pas d'électricité statique afin de ne pas adhérer sur les parties de l'élément d'enregistrement qui n'ont pas été magnétisées. Ces révélateurs pulvérulents doivent également ne pas être influencés par l'humidité. Enfin, leurs propriétés ne doivent pratiquement par subir de modifications au cours du temps.

Les révélateurs pulvérulents qui ont été utilisés jusqu'ici pour le développement des images latentes dans les machines imprimantes magnétiques comprennent des particules finement divisées constituées chacune d'une résine organique thermoplastique enrobant des particules magnétiques. Pour fabriquer ces révélateurs, on a utilisé, dans l'art antérieur, différents procédés. C'est ainsi que l'on connaît un procédé qui a été décrit dans le brevet des Etats-Unis d'Amérique N° 3 639 245 dans lequel le mélange des particules magnétiques dans la résine est réalisé au moyen d'un broyeur à cylindre de caoutchouc qui est porté à une température suffisante pour provoquer la fusion de la résine. On connaît également un procédé qui a été décrit dans le brevet français N° 2 253 230 dans lequel l'incorporation des particules magnétiques dans la résine thermoplastique est effectuée, soit après dissolution de cette résine dans une solution d'alcool, soit en faisant appel à une installation connue à lit fluidisé. Un autre procédé classique de préparation de révélateur pulvérulent, qui a été cité dans le brevet français N° 2 301 847, consiste à incorporer les particules magnétiques dans la résine thermoplastique à une température à laquelle cette résine fond, à brasser le tout pour obtenir un mélange homogène, et à réduire en poudre ce mélange après refroidissement.

Ces révélateurs pulvérulents ne donnent cependant pas toute la satisfaction désirable du fait qu'aucun d'eux ne répond à toutes les conditions qui ont été mentionnées plus haut. En particulier, on observe chez la plupart d'entre eux une tendance à s'agglutiner et à se charger d'électricité statique. En outre, leurs propriétés se modifient de façon notable au cours du temps. Enfin, ces révélateurs sont très sensibles à l'humidité.

Afin de remédier à ces inconvénients, on a proposé un procédé de fabrication de révélateur pulvérulent qui a été décrit dans la demande de brevet japonais déposée par la Demanderesse le 4 Septembre 1979 et publiée sous le N° 55-38 597. Ce procédé consiste à faire fondre la résine organique thermoplastique, à la traiter, lorsqu'elle est fondue, par un agent de traitement constitué par un silane répondant à la formule générale suivante:

$$R'{-}Si(OR)_3$$

dans laquelle R′ est un groupe contenant un radical organique réactif capable de réagir avec la résine thermoplastique, et OR est un groupe alkoxy, et à incorporer ensuite les particules magnétiques. Après quoi, ce mélange est laissé à refroidir, puis, après solidification, est réduit en poudre.

Ce révélateur pulvérulent, qui répond à toutes les conditions énoncées plus haut, a cependant pour inconvénient de présenter, lorsqu'il est porté à sa température de fusion au cours de son utilisation dans la machine imprimante, une viscosité relativement élevée, de sorte qu'il pénètre difficilement dans le papier sur lequel il doit être fixé. Afin d'assurer une meilleure pénétration dans le papier, il est donc nécessaire de porter ce révélateur à une température notablement supérieure à sa température de fusion. Il en résulte que le dispositif de fixation d'images qui utilise ce révélateur fonctionne à une température relativement élevée qui, pratiquement, dépasse toujours 140°.

La présente invention remédie à cet inconvénient et propose une poudre révélatrice qui, destinée au développement d'images magnétiques latentes, offre l'avantage de présenter, lors de sa fusion, une viscosité peu élevée et, par suite, de permettre au dispositif de fixation d'images de fonctionner à une température notablement plus faible que celle qui est nécessaire à la fixation, sur le papier, de la poudre révélatrice décrite dans la demande de brevet japonaise mentionnée ci-dessus.

Un objet de l'invention concerne une poudre pour le développement d'images latentes formées sur un support d'images, cette poudre comprenant des particules finement divisées issues du broyage d'une substance solidifiée, cette substance résultant de la solidification d'un mélange formé à partir d'au moins une résine organique thermoplastique qui est d'abord fondue, puis traitée par un agent de traitement et est mélangée ensuite à des particules magnétiques, ces particules magnétiques et l'agent de traitement représentant respectivement de 5 à 80% et de 0,01 à 10% du poids de la composition finale de la poudre, ladite poudre étant caractérisée en ce que ledit agent de traitement est constitué par un titanate organique répondant à l'une des formules générales suivantes:

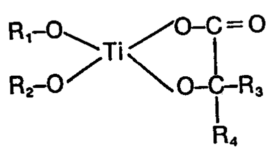

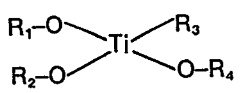

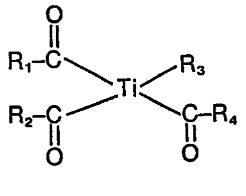

$R_1-O-Ti-O-R_2$

dans lesquelles $R_1$, $R_2$, $R_3$ et $R_4$ désignent des groupes fonctionnels contenant des radicaux organiques.

Un autre objet de l'invention concerne un procédé pour l'obtention de la poudre de développement précitée, ce procédé consistant à réaliser un mélange intime à chaud comprenant de 5 à 80% en poids de particules magnétiques et au moins une résine organique thermoplastique traitée par une quantité allant de 0,01 à 10% en poids d'un agent de traitement, à laisser refroidir ce mélange intime jusqu'à ce qu'il se solidifie et à réduire en poudre le mélange intime ainsi solidifié, ce mélange à chaud étant obtenu en chauffant d'abord ladite résine organique avec ledit agent de traitement, de manière à obtenir un mélange fondu homogène, et en ajoutant ensuite lesdites particules magnétiques pour les disperser dans ce mélange, ledit procédé étant caractérisé en ce que ledit agent de traitement répond à l'une des formules générales suivantes:

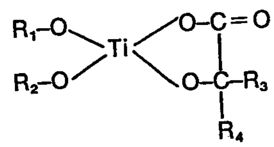

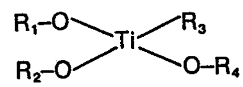

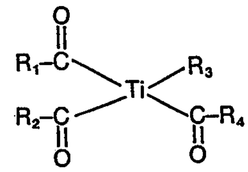

$R_1-O-Ti-O-R_2$

dans lesquelles $R_1$, $R_2$, $R_3$, $R_4$ désignent des groupes fonctionnels contenant des radicaux organiques.

La poudre de développement de la présente invention comprend de très fines particules sèches constituées chacune d'une substance organique enrobant des particules magnétiques, cette substance organique étant formée elle-même d'au moins une résine organique thermoplastique traitée par un titanate organique. La résine organique thermoplastique utilisée a un point de ramollissement de l'ordre d'environ 60 °C et un point de fusion de l'ordre de 120 °C. Elle est choisie de préférence dans le groupe comprenant les polyamides, les polystyrènes, les résines vinyliques, les copolymères vinyliques, les résines cétoniques, les résines acryliques, les copolymères acryliques et les esters de cellulose. A titre d'exemples de polyamides, on peut citer les résines produites industriellement par la Société «General Mills Company» et vendues en France par la Société dite «Schering France» sous les marques de fabrique de «Versamid 930» et «Versamid

961» (marques déposées), la résine vendue sous le nom de «Scope 30» (marque déposée) par la Société Française d'organo-synthèse, la résine dénommée «Platamid H 104» (marque déposée) de la Société Ato Chimie, la résine dénommée «Terlan 1005» (marque déposée) de la Société T.R.L., la résine vendue sous le nom de «Réammide PFS 30» (marque déposée) par la Société Chemplast ou encore la résine vendue sous la dénomination de «Polymid 1060» par la Société «Krumbhear Resin Division of Lawter Chemical Incorporated». On peut également citer, à titre d'exemples de polystyrènes, les résines vendues sous les marques commerciales de «Supra Pal LG» et «Supra Pal AP» par la Société «Badische Anilin Soda Fabrik» ou encore celles vendues sous les noms de «Piccolastic D100» et «Piccolastic D150» (marques déposées) par la Société Hercules. De même, on peut indiquer à titre d'exemples de résines vinyliques, les résines produites industriellement sous les noms de «Rhodopas», «Rhovinal B7-20» et «Rhovinal F» (marques déposées) par la Société des Usines Chimiques Rhône-Poulenc, ou encore la résine vendue sous la marque de fabrique «Butvar B72A» par la compagnie Monsanto. A titre d'exemple de copolymère vinylique, on peut citer le copolymère produit par la Société «Du Pont de Nemours» et vendu en France par la Société dite «Elvax» sous le nom de «copolymères éthylène acétate de vinyle 420». De même, des exemples de résines cétoniques sont celles qui sont commercialisées sous les noms de «résine cétonique N» par la Société «Badische Anilin Soda Fabrik», de «résine cétonique AFS» par la Société Bayer, ou encore celles vendues sous les noms de «résines cétonique AP» et de «résine cétonique SK» par la Société Huls. On peut également citer, à titre d'exemples de résines acryliques, les résines commercialisées sous les noms de «Paraloïd B66» et de «Paraloïd B72» par la Société «Rohm and Haas», ainsi que celle produite sous le nom de «Plexigum PM 381» (marque déposée) par la Société Rohm. De même, un exemple de copolymère acrylique connu est celui vendu sous le nom de «Styrène acrylique Piccotoner» par la Société Hercules. Enfin, on peut citer à titre d'exemple d'ester de cellulose, l'acéto butyrate de cellulose qui est commercialisée sous le nom de «Cab 551-0-01» par la Société Eastman Chemical.

On incorpore à cette résine organique thermoplastique un titanate choisi parmi les titanates organiques, ce titanate pouvant être, par exemple, l'un de ceux qui répondent aux formules générales suivantes:

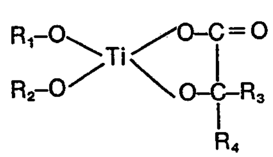

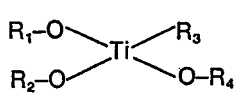

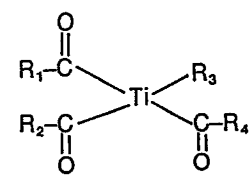

$R_1-O-Ti-O-R_2$

dans lesquelles $R_1$, $R_2$, $R_3$ et $R_4$ désignent des groupes fonctionnels contenant des radicaux organiques. Parmi les titanates qui répondent à ces formules, on peut citer le titanium di (dioctyl pyrophosphato)oxyacétate qui est vendu sous le nom de «KR 1385» (marque déposée) par la Société américaine KENRICH PETROCHEMICALS INC. et qui a pour formule:

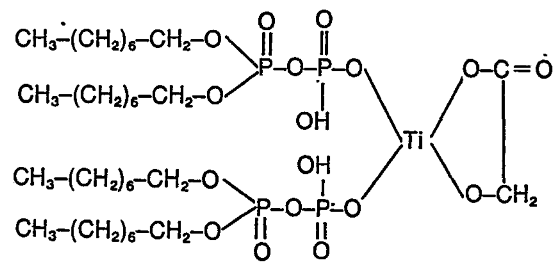

On peut également citer l'isopropyl tri (dioctylpyrophosphato) titanate qui est vendu par cette même société américaine sous le nom de «KR 38S» (marque déposée) et qui a pour formule:

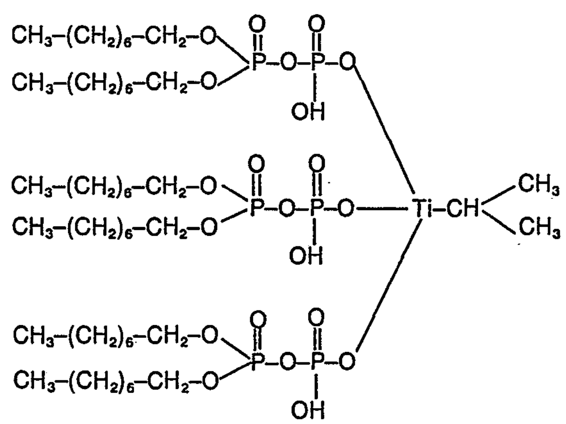

On peut aussi citer l'isopropyl - tri- isostearoyl titanate de cette même société qui, vendu sous le nom de «KR TTS» (marque déposée), a pour formule:

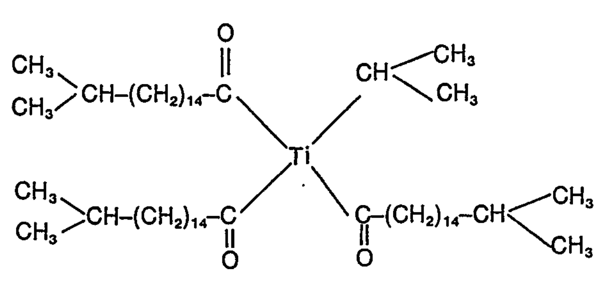

On peut de même citer le titanium di (di-tridécyl) phosphite de cette même société qui, vendu sous le nom de «KR 55» (marque déposée) répond à la formule suivante:

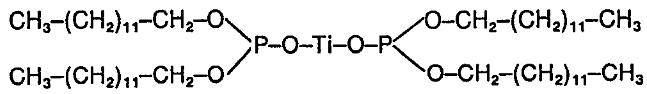

On incorpore également à la résine thermoplastique des particules magnétisées ou magnétisables, par exemple d'oxyde de fer magnétique, dont les dimensions sont généralement inférieures à cinq microns. Il faut signaler cependant que d'autres matériaux ferromagnétiques, tels que les alliages et les oxydes de nickel, de fer ou de cobalt, ou encore les ferrites, peuvent également être utilisées. Toutefois, bien qu'il soit préférable de disposer de particules de matériau magnétisé en permanence, il n'est pas exclu d'employer des particules de matériau magnétique doux, tel que des particules de fer doux par exemple.

On peut aussi incorporer à cette résine divers colorants, pigments ou agents analogues.

La quantité de particules magnétiques qu'il faut ajouter à la résine thermoplastique pour obtenir une poudre de développement satisfaisante représente de 5 à 80% du poids total de la poudre finale, tandis que celle du titanate représente de 0,01 à 10% de ce poids total. Le mélange de tous ces ingrédients est réalisé en chauffant la résine thermoplastique et le titanate, de façon à obtenir un mélange fondu auquel on ajoute alors la poudre magnétique qu'on disperse dans le mélange. On laisse ensuite refroidir le mélange fondu jusqu'à ce qu'il se solidifie en masse. Après quoi, on le broie en particules qu'on classe suivant leurs dimensions moyennes d'environ 5 à 60 microns. On ajoute ensuite aux particules de poudre ainsi obtenues une faible quantité de résine polytétrafluoroéthylène, cette quantité représentant environ de 0,01 à 10% du poids total de la poudre de développement finale. Comme exemples de résine polytétrafluoroéthylène, on peut citer les résines vendues sous les marques de fabrique «Soréflon 7», «Soréflon L 206» ou «Soréflon 81 G» par la Société des Produits Chimiques Ugine-Kuhlmann. On peut également ajouter des agents de fluidification pulvérulents aux particules sèches de poudre pour améliorer leur fluidification. Un agent de fluidification convenable peut être constitué, par exemple, par la silice colloïdale divisée qui est vendue sous la dénomination commerciale de «CAB-O-SIL» par la Société «Cabot Corporation». Cette incorporation est réalisée dans une proportion de l'ordre de 0,01% à 10% du poids total de la poudre de développement finale. On peut enfin ajouter des particules de noir de carbone dans une proportion comprise entre 0,01 et 10% du poids total de la poudre de développement finale. Ces particules de noir de carbone peuvent être de n'importe lequel des types connus. C'est ainsi que l'on pourra utiliser le noir de carbone vendu sous le nom de «Vulcan XC 72 R» (marque déposée) par la Société «Cabot Corporation», ou celui vendu sous la dénomination commerciale de «Conductex 950» par la Société dite «Columbian Inc», ou encore celui commercialisé sous le nom de «Corax L» par la Société Degussa. Il faut signaler ici que cette adjonction de noir de carbone peut être réalisée indifféremment, soit lors de l'opération de fusion de la résine organique thermoplastique, soit après les opérations de broyage du mélange solide résultant de l'incorporation à cette résine du titanate et des particules magnétiques.

Préférentiellement, les particules magnétiques qui sont incorporées à la résine organique thermoplastique sont, soit des particules magnétisées en permanence, soit des particules d'un matériau susceptible d'être magnétisé en permanence. Dans ce dernier cas , la magnétisation de ces particules peut être effectuée, soit lors de l'incorporation de ces particules à la résine organique thermoplastique, soit après les opérations de broyage mentionnées ci-dessus. Il faut signaler ici que cette opération de magnétisation est réalisée en utilisant une induction magnétique constante dont la valeur est comprise entre $10^{-2}$ et 2 Teslas. Préférentiellement, cette induction magnétique a une valeur de l'ordre de 0,2 Tesla.

Les exemples suivants sont donnés pour illustrer des modes de réalisation préférés de poudres de développement selon l'invention. Dans ces exemples, qui n'ont aucun caractère limitatif, les proportions s'entendent en poids de la composition totale de la poudre de développement.

EXEMPLE 1.

On prépare une poudre de développement avec les produits suivants:

| | |
|---|---|
| Résine polyamide «Versamid 961» | 42% |
| Résine cétone-aldéhyde «SK» (marque déposée) de la Société HULS | 21% |
| Magnétite vendue sous la dénomination commerciale de «NP 12» par la Société SOFREM | 31% |
| Titanate «KR 38S» de KENRICH PETROCHEMICALS INC. | 2% |
| Silice «CAB-O-SIL» Grand M 5 de Cabot Corporation | 1% |
| Polytétrafluoroéthylène «SOREFLON L 206» de UGINE-KUHLMANN | 1% |
| Noir de carbone «VULCAN XC72R» de Cabot Corporation | 2% |

Après avoir placé la résine polyamide et la résine cétone-aldéhyde dans une cuve appropriée équipée d'un mélangeur, ou chauffe de manière à faire fondre ces deux résines et, après fusion, on brasse pour obtenir un mélange fondu homogène. On ajoute alors le titanate, les particules magnétiques et le noir de carbone qu'on disperse dans le

mélange fondu. On continue à agiter et à chauffer jusqu'à ce qu'on obtienne un mélange fondu homogène. On verse alors la masse fondue dans des cuvettes peu profondes, de façon à former de grandes plaquettes minces. Celles-ci sont refroidies assez rapidement pour éviter que les particules de magnétite ne se séparent du mélange. Les plaquettes ainsi formées sont ensuite concassées, puis broyées et réduites en fines particules pulvérulentes à l'aide d'un appareil à broyage très fin tel que, par exemple, le broyeur rotatif à grande vitesse qui est vendu par la société PALLMANN.

La poudre est ensuite triée, par exemple au moyen d'un tamis à air, de manière à séparer les particules de poudre dont les dimensions sont comprises entre 5 et 60 microns. Les particules ainsi séparées sont alors mélangées à sec avec 1% en poids de polytétrafluoroéthylène «SOREFLON L 206» et avec 1% en poids de silice colloïdale «CAB-O-SIL» Grad M5.

On obtient ainsi une poudre de développement qui présente un champ coercitif de l'ordre de 500 œrsteds (1 œrsted = 79,6 A/m) et qui, de ce fait, permet d'obtenir des images imprimées de grande finesse et très contrastées par rapport à la teinte de fond du papier sur lequel elles sont formées. La température de fusion minimale à laquelle on peut fixer définitivement les images ainsi obtenues se situe au voisinage de 100 °C.

EXEMPLE 2.

On répète les opérations de préparation de la poudre de développement décrites dans l'exemple 1, mais en prenant les produits suivants:

| | |
|---|---|
| Résine polyamide «Versamid 930» | 44% |
| Résine cétone-aldéhyde «AFS» de la Société BAYER | 22% |
| Oxyde de fer $FE_2O_3$, γ vendu sous la marque commerciale «MAG 1730» par la société BAYER | 20% |
| Titanate «KR 55» de KENRICH PETROCHIMICALS INC. | 1% |
| Silice «AEROSIL 200» (marque déposée) de la société DEGUSSA | 2% |
| Polytétrafluoroéthylène «SOREFLON L206» | 1% |
| Noir de carbone «VULCAN XC 72R» | 10% |

On obtient alors une poudre de développement qui présente un champ coercitif de l'ordre de 300 œrsteds et qui fond à une température voisine de 105 °C.

EXEMPLE 3.

On prépare une poudre de développement à partir des produits suivants:

| | |
|---|---|
| Résine polyamide «Versamid 961» | 63% |
| Magnétite «NP 12» | 31% |
| Titanate «KR138S» de KENRICH PETROCHIMICALS INC. | 2% |
| Silice «AEROSIL 300» de la Société DEGUSSA | 0,5% |
| Polytétrafluoroéthylène «SOREFLON 81G» | 0,5% |
| Noir de carbone «CONDUCTEX 950» | 3% |

On commence par fondre la résine polyamide et, après fusion, on ajoute le titanate, les particules de magnétite et le noir de carbone qu'on disperse dans la résine. On brasse l'ensemble de façon à obtenir un mélange fondu homogène. Après quoi, on réalise les opérations de refroidissement, de broyage et d'adjonction de polytétrafluoroéthylène et de silice colloïdale qui ont été indiquées dans l'exemple 1.

On obtient ainsi une poudre de développement qui présente un champ coercitif de l'ordre de 500 œrsteds et qui fond à une température voisine de 100 °C.

EXEMPLE 4.

On répète les opérations de préparation de la poudre de développement décrites dans l'exemple 1, mais en prenant les produits suivants:

| | |
|---|---|
| Résine polyamide «SCOPE 30» | 50% |
| Résine cétone-aldéhyde «AFS» | 20% |
| Magnétite «NP 12» | 20% |
| Titanate «KRTTS» de KENRICH PETROCHIMICALS INC. | 2% |
| Silice «CAB-O-SIL» Grad M5 | 1% |
| Polytétrafluoroéthylène «SOREFLON L 206» | 2% |
| Noir de carbone «CORAX L» de DEGUSSA | 5% |

On opère comme dans l'exemple 1. La poudre de développement obtenue a un champ coercitif de l'ordre de 450 œrsteds et fond à une température de 110 °C.

EXEMPLE 5.

On prépare une poudre de développement en opérant comme dans l'exemple 1, mais en prenant les produits suivants:

| | |
|---|---|
| Résine polyamide «Versamid 961» | 30% |
| Résine cétone-aldéhyde «SK» | 30% |
| Titanate «KR 38S» | 4% |
| Magnétite «NP12» | 34% |
| Polytétrafluoroéthylène «SOREFLON 81 G» | 0,5% |
| Silice «CAB-O-SIL» Grad M5 | 0,5% |
| Noir de carbone «VULCAN XC 72 R» | 1% |

La poudre de développement obtenue a un champ coercitif voisin de 500 œrsteds et fond à une température de 120 °C.

EXEMPLE 6.

On répète les opérations de l'exemple 1, mais en prenant les produits suivants:

| | |
|---|---|
| Résine polyamide «Terlan 1005» de T.R.L | 35% |
| Résine cétone-aldéhyde vendue sous la marque commerciale «AP» par la société HULS | 10% |
| Magnétite «NP12» | 44% |
| Titanate «KR 138S» | 8% |
| Polytétrafluoroéthylène «SOREFLON L 206» | 1% |
| Silice «CAB-O-SIL» Grad M5 | 1% |
| Noir de carbone «VULCAN XC72 R» | 1% |

La poudre de développement obtenue a un champ coercitif de l'ordre de 530 œrsteds et fond à une température de 125 °C.

EXEMPLE 7.

On opère comme dans l'exemple 1 en prenant les produits suivants:

| | |
|---|---|
| Résine polyamide «Versamid 961» | 60% |
| Résine cétone-aldéhyde «SK» | 15% |

Magnétite «NP 12» 20%
Titanate «KR 38S» 0,5%
Polytétrafluoroéthylène «SOREFLON L 206» 2%
Silice «AEROSIL 200» 0,5%
Noir de carbone «CONDUCTEX 950» 2%

On obtient une poudre de développement qui a un champ coercitif de l'ordre de 450 œrsteds et qui fond à une température de 100 °C.

On a effectué, sur les poudres de développement fabriquées comme on l'a indiqué ci-dessus, des essais de viscosité en utilisant un appareil de mesure de type connu dans lequel la poudre à tester est, avant toute mesure, portée à une température donnée à laquelle elle est alors rendue liquide. A titre d'exemple, on a utilisé ici l'appareil de mesure de viscosité qui est commercialisé sous le nom de «PLASTOMETRE ZWICK». L'essai de viscosité qui est réalisé à l'aide de cet appareil consiste à peser la quantité de substance liquifiée qui, maintenue à la susdite température donnée, s'écoule à travers un orifice calibré déterminé de l'appareil, en un temps prédéterminé, sous l'action d'une charge de masse prédéterminée. En opérant ainsi avec la poudre de développement préparée de la manière indiquée dans l'exemple 1 susmentionné, on a, après avoir fait fondre cette poudre et maintenu à la température de 100 °C le produit liquide ainsi obtenu, pesé la quantité de ce liquide qui s'est écoulé en un temps de 2 minutes et 30 secondes au travers de l'orifice calibré de l'appareil sous une charge de 0,670 grammes. On a trouvé que la masse de liquide qui s'était ainsi écoulée était égale à 7,90 grammes. En recommençant cette mesure dans les mêmes conditions, mais avec une charge de 2,160 kilogrammes au lieu de 0,670 grammes, on a trouvé que la masse de liquide écoulée était égale à 30,05 grammes.

On a, à titre de comparaison, repris ces essais de viscosité en opérant avec une poudre de développement préparée comme dans l'exemple 1 susmentionné, mais en remplaçant la quantité de titanate entrant dans la composition de cette poudre par une quantité égale de silane «A 180», ce silane étant l'un de ceux mentionnés dans la demande de brevet japonais précitée N° 55-38 597. En opérant dans les mêmes conditions que ci-dessus, on a alors trouvé que, sous une charge de 0,670 grammes, la masse de liquide écoulée était égale à 0,16 grammes, alors que, sous une charge de 2,160 kilogrammes, la masse de liquide écoulée était égale à 5,41 grammes. On voit ainsi qu'en remplaçant, dans la composition servant à la préparation de la poudre de développement, le titanate par un silane, les masses de liquide écoulées au cours de l'essai de viscosité sont plus faibles, ce qui correspond à une viscosité plus élevée. Inversement, si, dans la composition qui sert à préparer la poudre de développement, on incorpore un titanate, conformément à ce qui a été exposé ci-dessus, on obtient, en opérant comme on l'a indiqué plus haut, une poudre de développement qui présente, lors de sa fusion, une viscosité relativement peu élevée, ce qui lui permet de pénétrer plus facilement dans le papier sur lequel elle a été déposée.

## Revendications

1. Poudre pour le développement d'images latentes formées sur un support d'images, cette poudre comprenant des particules finement divisées issues du broyage d'une substance solidifiée, cette substance résultant de la solidification d'un mélange formé à partir d'au moins une résine organique thermoplastique qui est d'abord fondue, puis traitée par un agent de traitement et est mélangée ensuite à des particules magnétiques, ces particules magnétiques et l'agent de traitement représentant respectivement de 5 à 80% et de 0,01 à 10% du poids de la composition finale de la poudre, ladite poudre étant caractérisée en ce que ledit agent de traitement est constitué par un titanate organique répondant à l'une des formules générales suivantes:

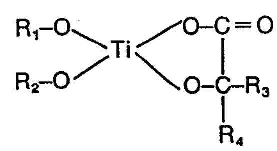

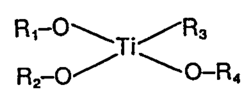

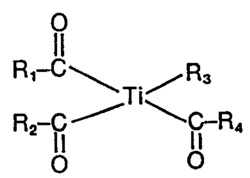

$$R_1-O-Ti-O-R_2$$

dans lesquelles $R_1$, $R_2$, $R_3$ et $R_4$ désignent des groupes fonctionnels contenant des radicaux organiques.

2. Poudre pour le développement d'images latentes selon revendication 1, caractérisée en ce que les particules magnétiques sont constituées par des particules métalliques magnétisées en permanence.

3. Poudre pour le développement selon l'une quelconque des revendications 1 et 2 caractérisée en ce qu'elle contient en outre des particules de noir de carbone dans une proportion comprise entre 0,01 à 10% du poids total de la poudre.

4. Poudre pour le développement selon l'une quelconque des revendications 1 à 3 caractérisée en ce que la résine organique thermoplastique est choisie dans le groupe comprenant les résines polyamides, les polystyrènes, les résines vinyliques, les copolymères vinyliques, les résines cétoniques, les résines acryliques, les copolymères acryliques et les esters de cellulose.

5. Poudre pour le développement selon l'une quelconque des revendications 1 à 4 caractérisée

en ce qu'elle est mélangée en outre à de la poudre de polytétrafluoroéthylène, la proportion de cette dernière étant comprise entre 0,01 et 10% du poids de la composition finale de la poudre.

6. Poudre pour le développement selon l'une quelconque des revendications 1 à 5 caractérisée en ce qu'elle est mélangée en outre à de la silice colloïdale, la proportion de silice étant comprise entre 0,01 à 10% en poids de la composition finale de la poudre.

7. Procédé de fabrication d'une poudre pour le développement d'images latentes formées sur un support d'images, ce procédé consistant à réaliser un mélange intime à chaud comprenant de 5 à 80% en poids de particules magnétiques et au moins une résine organique thermoplastique traitée par une quantité allant de 0,01 à 10% en poids d'un agent de traitement, à laisser refroidir ce mélange intime jusqu'à ce qu'il se solidifie et à réduire en poudre le mélange intime ainsi solidifié, ce mélange intime à chaud étant obtenu en chauffant d'abord ladite résine organique avec ledit agent de traitement de manière à obtenir un mélange fondu homogène, et en ajoutant ensuite lesdites particules magnétiques pour les disperser dans ce mélange, ledit procédé étant caractérisé en ce que ledit agent de traitement répond à l'une des formules générales suivantes:

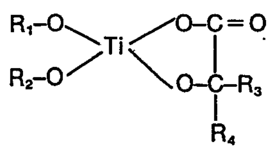

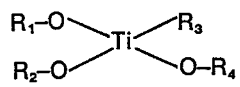

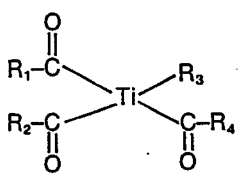

$R_1-O-Ti-O-R_2$

dans lesquelles $R_1$, $R_2$, $R_3$ et $R_4$ désignent des groupes fonctionnels contenant des radicaux organiques.

## Claims

1. A powder for developing latent images formed on an image carrier, this powder comprising finely divided particles derived from the crushing of a solidified substance, this substance being formed by solidification of a mixture produced from at least one organic thermoplastic resin which is melted initially and then treated with a processing agent and then mixed with magnetic particles, these magnetic particles and the processing agent respectively representing from 5 to 80% and from 0.01 to 10% of the weight of the final composition of the powder, the said powder being characterised in that the said processing agent is formed by an organic titanate corresponding to one of the following general formulae:

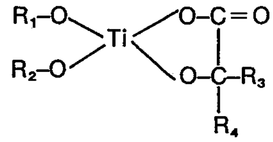

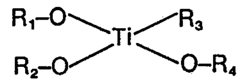

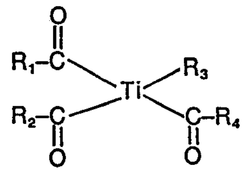

$R_1-O-Ti-O-R_2$

in which $R_1$, $R_2$, $R_3$ and $R_4$ denote functional groups containing organic radicals.

2. A powder for developing latent images according to claim 1, characterised in that the magnetic particles are formed by permanently magnetised metal particles.

3. A developing powder according to either of the claims 1 and 2, characterised in that it also contains carbon black particles in a proportion comprised between 0.01 and 10% of the total weight of the powder.

4. A developing powder according to any one of the claims 1 to 3, characterised in that the organic thermoplastic resin is selected from the group comprising polyamide resins, polystyrenes, vinyl resins, vinyl copolymers, ketonic resins, acrylic resins, acrylic copolymers and cellulose esters.

5. A developing powder according to any one of the claims 1 to 4, characterised in that it is also mixed with polytetrafluoroethylene powder, the proportion of this latter being comprised between 0.01 and 10% of the weight of the final composition of the powder.

6. A developing powder according to any one of the claims 1 to 5, characterised in that it is also mixed with colloidal silica, the proportion of silica being comprised between 0.01 and 10% by weight of the final composition of the powder.

7. A process for producing a powder for developing latent images formed on an image carrier, this process consisting in producing an intimate mixture in the hot state, comprising from 5 to 80% by weight of magnetic particles and at least one organic thermoplastic resin treated with a quantity amounting to between 0.01 and 10% by weight of a processing agent, in allowing this intimate mixture to cool until it sets and in reducing the intimate mixture thus solidified to a powder, this intimate mixture in the hot state being obtained by initially heating the said organic resin with the said processing agent in such manner as to obtain a homogenous molten mixture, and in

thereupon adding the said magnetic particles for dispersing these within this mixture, characterised in that the said processing agent corresponds to one of the following general formulae:

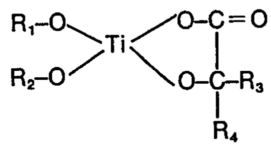

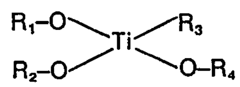

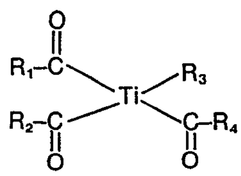

$R_1$–O–Ti–O–$R_2$

in which $R_1$, $R_2$, $R_3$ and $R_4$ denote functional groups containing organic radicals.

**Patentansprüche**

1. Pulver zur Entwicklung latenter Bilder auf einem Bildträger, enthaltend feinteilige, durch Verreiben einer erstarrten Substanz erhaltene Teilchen, wobei diese Substanz durch Erstarren eines Gemischs entsteht, das aus mindestens einem organischen thermoplastischen Harz gebildet wird, das zunächst geschmolzen wird, dann mit einem Behandlungsmittel behandelt und schliesslich mit magnetischen Teilchen vermischt wird, wobei diese magnetischen Teilchen 5 bis 80 Gew.% und das Behandlungsmittel 0,01 bis 10 Gew.% der endgültigen Zusammensetzung des Pulvers ausmachen, dadurch gekennzeichnet, dass das Behandlungsmittel aus einem organischen Titanat einer der folgenden allgemeinen Formeln besteht:

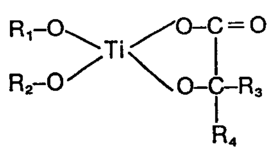

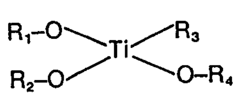

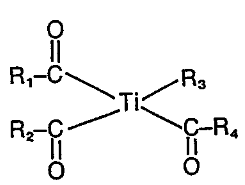

$R_1$–O–Ti–O–$R_2$

worin $R_1$, $R_2$, $R_3$ und $R_4$ organische Reste enthaltende funktionelle Gruppen bedeuten.

2. Pulver zur Entwicklung latenter Bilder nach Anspruch 1, dadurch gekennzeichnet, dass die magnetischen Teilchen aus permanent-magnetisierten Metallteilchen bestehen.

3. Pulver nach Anspruch 1 oder 2, dadurch gekennzeichnet, dass es zusätzlich Russteilchen in einer Menge von 0,01 bis 10 Gew.%, bezogen auf das Gesamtgewicht des Pulvers, enthält.

4. Pulver nach einem der Ansprüche 1 bis 3, dadurch gekennzeichnet, dass das organische thermoplastische Harz aus der aus den Polyamiden, Polystyrolen, Vinylharzen, Vinyl-Copolymeren, Ketonharzen, Acrylharzen, Acryl-Copolymeren und Celluloseestern bestehenden Gruppe ausgewählt ist.

5. Pulver nach einem der Ansprüche 1 bis 4, dadurch gekennzeichnet, dass es zusätzlich mit Polytetrafluoräthylen-Pulver vermischt ist, wobei der Anteil des letzteren zwischen 0,01 und 10 Gew.% der endgültigen Zusammensetzung des Pulvers beträgt.

6. Pulver nach einem der Ansprüche 1 bis 5, dadurch gekennzeichnet, dass es zusätzlich mit kolloidaler Kieselsäure vermischt ist, wobei der Anteil des Siliciumdioxids zwischen 0,01 und 10 Gew.% der endgültigen Zusammensetzung des Pulvers beträgt.

7. Verfahren zur Herstellung eines Pulvers zur Entwicklung latenter Bilder auf einem Bildträger, bei dem in der Hitze ein inniges Gemisch gebildet wird, das 5 bis 80 Gew.% magnetische Teilchen und mindestens ein mit einer Menge von 0,01 bis 10 Gew.% eines Behandlungsmittels behandeltes organisches thermoplastisches Harz umfasst, bei dem man dieses innige Gemisch erkalten lässt, bis es erstarrt, und das so erstarrte innige Gemisch pulverisiert, wobei dieses heisse innige Gemisch zunächst durch Erhitzen des organischen Harzes mit dem Behandlungsmittel unter Bildung eines homogenen geschmolzenen Gemischs und dann durch Zugabe der magnetischen Teilchen, die in diesem Gemisch dispergiert werden, erhalten wird, dadurch gekennzeichnet, dass das Behandlungsmittel einer der folgenden allgemeinen Formeln entspricht:

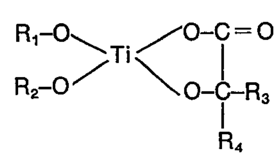

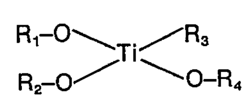

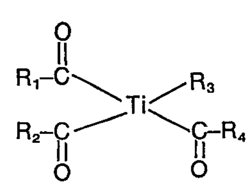

$R_1$–O–Ti–O–$R_2$

worin $R_1$, $R_2$, $R_3$ und $R_4$ organische Reste enthaltende funktionelle Gruppen bedeuten.